# EUROPEAN PATENT SPECIFICATION

(11) **EP 3 269 182 B1**
(45) Date of publication and mention of the grant of the patent: **11.08.2021**
(21) Application number: 15885761.5
(22) Date of filing: 11.12.2015
(51) Int. Cl.: H04W 8/20, H04W 52/02, H04W 76/28

(54) **MOBILITY MANAGEMENT ENTITY, USER EQUIPMENT AND METHOD TO SUPPORT EXTENDED DISCONTINUOUS RECEPTION MECHANISM**
MOBILITÄTSMANAGEMENTEINHEIT, BENUTZERGERÄT UND VERFAHREN ZUR UNTERSTÜTZUNG EINES ERWEITERTEN DISKONTINUIERLICHEN EMPFANGSMECHANISMUS
ENTITÉ DE GESTION DE MOBILITÉ, ÉQUIPEMENT UTILISATEUR ET PROCÉDÉ POUR PRENDRE EN CHARGE UN MÉCANISME DE RÉCEPTION DISCONTINUE ÉTENDUE

(30) Priority: 13.03.2015 US 201562133193 P
(43) Date of publication of application: 17.01.2018
(73) Proprietor: Intel Corporation, Santa Clara, CA 95054 (US)
(72) Inventor: BANGOLAE, Sangeetha L., Beaverton, Oregon 97007 (US); JAIN, Puneet, Hillsboro, Oregon 97124 (US)
(74) Representative: Goddar, Heinz J.
(86) International application number: PCT/US2015/065241
(87) International publication number: WO 2016/148752

(56) References cited:
- WO-A2-2015/005853
- US-A1- 2013 308 465
- US-A1- 2014 286 215
- US-A1- 2015 009 815
- US-A1- 2015 043 403
- "3rd Generation Partnership Project; Technical Specification Group Services and System Aspects; Study on Optimizations to Support High Latency Communications; Stage 2 (Release 13)", 3GPP STANDARD; 23709-030_RM, 3RD GENERATION PARTNERSHIP PROJECT (3GPP)?, MOBILE COMPETENCE CENTRE ; 650, ROUTE DES LUCIOLES ; F-06921 SOPHIA-ANTIPOLIS CEDEX ; FRANCE , 3 March 2015 (2015-03-03), XP050945432, Retrieved from the Internet: URL:http://www.3gpp.org/ftp/Specs/archive/ 23_series/23.709/ [retrieved on 2015-03-03]
- INTEL: "Enhanced power saving mode for efficient MT communication", 3GPP DRAFT; S2-150482_WAS0378_HLCOM_EPSM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sorrento, Italy; 20150126 - 20150131 30 January 2015 (2015-01-30), XP050961603, Retrieved from the Internet: URL:http://www.3gpp.org/ftp/tsg_sa/WG2_Arc h/TSGS2_107_Sorrento/Docs/ [retrieved on 2015-01-30]
- ERICSSON: 'MS energy consumption evaluation, PSM vs. eDRX`' GP-150205, 3GPP TSG GERAN #65 04 March 2015, SHANGHAI, P.R. CHINA, XP050931654
- ERICSSON LM: 'Pseudo CR 43.869 - MS energy consumption evaluation, PSM vs. eDRX' GP-150206, 3GPP TSG GERAN #65 04 March 2015, SHANGHAI, P.R. CHINA, XP050931655
- ERICSSON: 'PCR for uPoD eDRX' GP-140897, 3GPP TSG GERAN #64 12 November 2014, SAN FRANCISCO, USA, XP050895019
- None

## Description

### TECHNICAL FIELD

Embodiments pertain to radio access networks. Some embodiments relate to Discontinuous Reception (DRX) in cellular networks, including Third Generation Partnership Project Long Term Evolution (3GPP LTE) networks and LTE advanced (LTE-A) networks as well as 4^{th} generation (4G) networks and 5^{th} generation (5G) networks

### BACKGROUND

With the increase in different types of devices communicating over networks to servers and other computing devices, usage of 3GPP LTE systems has increased. In particular, both typical user equipment (UE) such as cell phones and Machine Type Communications (MTC) UEs currently use 3GPP LTE systems. MTC UEs pose a particular challenge as they are less computationally powerful and have less power for communication. Moreover, many MTC UEs are configured to remain essentially indefinitely in a single location. Examples of such MTC UEs include sensors (e.g., sensing environmental conditions) or microcontrollers in appliances or vending machines and provide a variety of services, such as smart utility metering, intelligent tracking in supply chain, fleet management and theft tracking. Studies have been ongoing in 3GPP to address the potential challenges that the support of these potentially billions of connected devices may pose. The UEs used for these MTC type of applications have certain characteristics such as being nomadic, low mobility, low priority and/or sending small amount of Mobile Originated/Mobile Terminated (MO/MT) data infrequently. For such UEs, battery power minimization is desirable, especially as some MTCs may be relatively inaccessible and/or may not have the ability to charge their batteries for the duration of their lifetime.

It would therefore be desirable to enable extended DRX (eDRX) maintain MTC UEs in low power idle mode for an extended period of time without any activities.

3GPP TR 23.709, V0.3.0, technical specification group services and system aspects, study on optimizations to support high latency communications, stage 2 (Release 13), February 2015 relates to coordination using the UE application and enhanced power saving mode.

### SUMMARY

The object of the present application is solved by the independent claims. Advantageous embodiments are described by the dependent claims.

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various embodiments discussed in the present document.
FIG. 1 shows an example of a portion of an end-to-end network architecture of an LTE network with various components of the network in accordance with some embodiments.
FIG. 2 illustrates components of a UE in accordance with some embodiments.
FIG. 3 illustrates an attach procedure flow in accordance with some embodiments.
FIG. 4 illustrates a flowchart of a method of UE attachment in accordance with some embodiments.

### DETAILED DESCRIPTION OF THE INVENTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

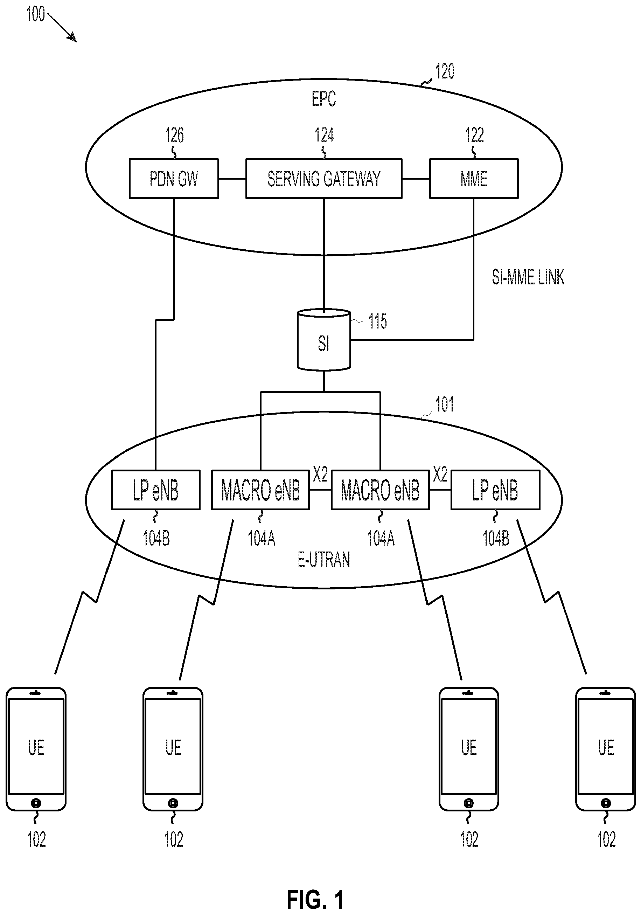

FIG. 1 shows an example of a portion of an end-to-end network architecture of a Long Term Evolution (LTE) network with various components of the network in accordance with some embodiments. As used herein, an LTE network refers to both LTE and LTE Advanced (LTE-A) networks as well as other versions of LTE networks to be developed. The network 100 may comprise a radio access network (RAN) (e.g., as depicted, the E-UTRAN or evolved universal terrestrial radio access network) 101 and core network 120 (e.g., shown as an evolved packet core (EPC)) coupled together through an S1 interface 115. For convenience and brevity, only a portion of the core network 120, as well as the RAN 101, is shown in the example.

The core network 120 may include a mobility management entity (MME) 122, serving gateway (serving GW) 124, and packet data network gateway (PDN GW) 126. The RAN 101 may include evolved node Bs (eNBs) 104 (which may operate as base stations) for communicating with user equipment (UE) 102. The eNBs 104 may include macro eNBs 1 04a and low power (LP) eNBs 104b. The eNBs 104 and UEs 102 may employ the enhanced DRX mode as described herein.

The MME 122 may be similar in function to the control plane of legacy Serving GPRS Support Nodes (SGSN). The MME 122 may manage mobility aspects in access such as gateway selection and tracking area list management. The serving GW 124 may terminate the interface toward the RAN 101, and route data packets between the RAN 101 and the core network 120. In addition, the serving GW 124 may be a local mobility anchor point for inter-eNB handovers and also may provide an anchor for inter-3GPP mobility. Other responsibilities may include lawful intercept, charging, and some policy enforcement. The serving GW 124 and the MME 122 may be implemented in one physical node or separate physical nodes.

The PDN GW 126 may terminate a SGi interface toward the packet data network (PDN). The PDN GW 126 may route data packets between the EPC 120 and the external PDN, and may perform policy enforcement and charging data collection. The PDN GW 126 may also provide an anchor point for mobility devices with non-LTE access. The external PDN can be any kind of IP network, as well as an IP Multimedia Subsystem (IMS) domain. The PDN GW 126 and the serving GW 124 may be implemented in a single physical node or separate physical nodes.

The eNBs 104 (macro eNBs 104a and micro eNBs 104b) may terminate the air interface protocol and may be the first point of contact for a UE 102. In some embodiments, an eNB 104 may fulfill various logical functions for the RAN 101 including, but not limited to, RNC (radio network controller functions) such as radio bearer management, uplink and downlink dynamic radio resource management and data packet scheduling, and mobility management. In accordance with embodiments, UEs 102 may be configured to communicate orthogonal frequency division multiplexed (OFDM) communication signals with an eNB 104 over a multicarrier communication channel in accordance with an OFDMA communication technique. The OFDM signals may comprise a plurality of orthogonal subcarriers.

The S1 interface 115 may be the interface that separates the RAN 101 and the EPC 120. It may be split into two parts: the S1-U, which may carry traffic data between the eNBs 104 and the serving GW 124, and the S1-MME, which may be a signaling interface between the eNBs 104 and the MME 122. The X2 interface may be the interface between eNBs 104. The X2 interface may comprise two parts, the X2-C and X2-U. The X2-C may be the control plane interface between the eNBs 104, while the X2-U may be the user plane interface between the eNBs 104.

With cellular networks, LP cells may be typically used to extend coverage to indoor areas where outdoor signals do not reach well, or to add network capacity in areas with dense usage. In particular, it may be desirable to enhance the coverage of a wireless communication system using cells of different sizes, macrocells, microcells, picocells, and femtocells, to boost system performance. The cells of different sizes may operate on the same frequency band, or may operate on different frequency bands with each cell operating in a different frequency band or only cells of different sizes operating on different frequency bands. As used herein, the term LP eNB refers to any suitable relatively low power eNB for implementing a smaller cell (smaller than a macro cell) such as a femtocell, a picocell, or a microcell. Femtocell eNBs may be typically provided by a mobile network operator to its residential or enterprise customers. A femtocell may be typically the size of a residential gateway or smaller and generally connect to a broadband line. The femtocell may connect to the mobile operator's mobile network and provide extra coverage in a range of typically 30 to 50 meters. Thus, a LP eNB 104b might be a femtocell eNB since it is coupled through the PDN GW 126. Similarly, a picocell may be a wireless communication system typically covering a small area, such as in-building (offices, shopping malls, train stations, etc.), or more recently in-aircraft. A picocell eNB may generally connect through the X2 link to another eNB such as a macro eNB 104a through its base station controller (BSC) functionality. Thus, LP eNB 104b may be implemented with a picocell eNB since it may be coupled to a macro eNB via an X2 interface, Picocell eNBs or other LP eNBs 104b may incorporate some or all functionality of a macro eNB 104a. In some cases, this may be referred to as an access point base station or enterprise femtocell.

Communication over an LTE network may be split up into 10ms frames, each of which may contain ten 1ms subframes. Each subframe of the frame, in turn, may contain two slots of 0.5ms. Each subframe may be used for uplink (UL) communications from the UE to the eNB or downlink (DL) communications from the eNB to the UE. In one embodiment, the eNB may allocate a greater number of DL communications than UL communications in a particular frame. The eNB may schedule transmissions over a variety of frequency bands (f₁ and f₂). The allocation of resources in subframes used in one frequency band and may differ from those in another frequency band. Each slot of the subframe may contain 6-7 symbols, depending on the system used. In one embodiment, the subframe may contain 12 subcarriers. A downlink resource grid may be used for downlink transmissions from an eNB to a UE, while an uplink resource grid may be used for uplink transmissions from a UE to an eNB or from a UE to another UE. The resource grid may be a time-frequency grid, which is the physical resource in the downlink in each slot. The smallest time-frequency unit in a resource grid may be denoted as a resource element (RE). Each column and each row of the resource grid may correspond to one OFDM symbol and one OFDM subcarrier, respectively. The resource grid may contain resource blocks (RBs) that describe the mapping of physical channels to resource elements and physical RBs (PRBs). A PRB may be the smallest unit of resources that can be allocated to a UE. A resource block may be 180 kHz wide in frequency and 1 slot long in time. In frequency, resource blocks may be either 12 x 15 kHz subcarriers or 24 x 7.5 kHz subcarriers wide. For most channels and signals, 12 subcarriers may be used per resource block, dependent on the system bandwidth. In Frequency Division Duplexed (FDD) mode, both the uplink and downlink frames may be 10ms and frequency (full-duplex) or time (half-duplex) separated. In Time Division Duplexed (TDD), the uplink and downlink subframes may be transmitted on the same frequency and are multiplexed in the time domain. The duration of the resource grid 400 in the time domain corresponds to one subframe or two resource blocks. Each resource grid may comprise 12 (subcarriers) ^{∗}14 (symbols) =168 resource elements.

There may be several different physical downlink channels that are conveyed using such resource blocks, including the physical downlink control channel (PDCCH) and the physical downlink shared channel (PDSCH). Each subframe may be partitioned into the PDCCH and the PDSCH. The PDCCH may normally occupy the first two symbols of each subframe and carries, among other things, information about the transport format and resource allocations related to the PDSCH channel, as well as H-ARQ information related to the uplink shared channel. The PDSCH may carry user data and higher layer signaling to a UE and occupy the remainder of the subframe. Typically, downlink scheduling (assigning control and shared channel resource blocks to UEs within a cell) may be performed at the eNB based on channel quality information provided from the UEs to the eNB, and then the downlink resource assignment information may be sent to each UE on the PDCCH used for (assigned to) the UE. The PDCCH may contain downlink control information (DCI) in one of a number of formats that tell the UE how to find and decode data, transmitted on PDSCH in the same subframe, from the resource grid. The DCI format may provide details such as number of resource blocks, resource allocation type, modulation scheme, transport block, redundancy version, coding rate etc. Each DCI format may have a cyclic redundancy code (CRC) and be scrambled with a Radio Network Temporary Identifier (RNTI) that identifies the target UE for which the PDSCH is intended. Use of the UE-specific RNTI may limit decoding of the DCI format (and hence the corresponding PDSCH) to only the intended UE.

The UE 102 may use DRX mode to extend battery life. In particular, the UE 102 may terminate monitoring the PDCCH for a predetermined amount of time when in DRX mode. The UE 102 may use different types of DRX, idle DRX (also called paging DRX), in which the UE 102 is in an idle state and does not have a Radio Resource Control (RRC) connection with the eNB 104, and active DRX, in which the UE 102 is in an RRC connected state. Idle mode DRX may be used by the UE 102 primarily to monitor the data and broadcast channels. The UE 102 in idle DRX may enter the RRC connected state from the idle state prior to monitoring the data channel. Active DRX may also permit power savings without the UE 102 entering the idle state, leading to a speed increase as the RRC connection may already be established. This may be beneficial for applications that do not use real-time data transfer, such as web browsing and instant messaging, in which the UE 102 may avoid continuous monitoring of the data connection and associated processing.

To establish DRX mode, the eNB 104 may typically broadcast or transmit a DRX configuration to the UE 102 through the RRC connection, during initial setup or reconfiguration of the UE 102. The DRX configuration may indicate which DRX modes are to be used, as well as various timers associated with the DRX mode(s). These timers may include on duration, inactivity, active, Hybrid Automatic Repeat Request (HARQ) round trip (RTT), Retransmission, and DRX Cycle Length. The on duration timer may indicate the period of time (i.e., number of subframes) for the UE 102 to keep awake (i.e., prior to entering DRX mode) after waking up from the DRX mode. The UE 102 may search for a PDCCH during this period. The inactivity timer may indicate the period of time for the UE 102 to keep awake after successfully decoding a PDCCH indicating an original transmission, not a re-transmission. After the inactivity timer expires, the UE 102 may enter a short DRX cycle in which whose period is shorter than the normal long DRX cycle. If the short DRX cycle expires without data being received by the UE 102, the UE 102 may enter the DRX mode using the long DRX cycle. The HARQ RTT timer may indicate the minimum interval time that retransmission of data from the eNB 104 is expected to arrive. The retransmission timer may indicate the maximum time period (and thus PDCCH subframes for the UE 102 to monitor) in which retransmission of data from the eNB 104 is expected. The active timer may indicate the total time for the UE 102 to keep awake after waking up. During this time period, the UE 102 may monitor the PDCCH, including all states causing the UE 102 to be active (e.g., the on-duration begins, the UE 102 receives the PDCCH, or monitors a retransmission). The active timer may include the On Duration Timer, the Inactivity Timer, the DRX Retransmission Timer and the media access control (MAC) Layer Contention Resolution Timer, as well as any other time period that the UE 102 determines (e.g., via control signaling) it is to stay active for communication with the eNB 104. The DRX cycle length may indicate a period of time between succeeding DRX cycles.

When the UE 102 exits the DRX mode (whether short or long), the UE 102 may start the on duration timer as well as starting to monitor the PDCCH in a specific subframe corresponding to a specific system frame number (SFN) provided in the DRX configuration to acquire a paging-radio network temporary identifier (P-RNTI). The UE 102 may thus exit the DRX mode to determine whether it has been paged by the eNB 104. Paging may occur when the network has data to be transmitted to the UE 102, to update system information or to provide an Earthquake and Tsunami Warning System (ETWS) indication to the UE 102. The MME 122 may initiate the paging sequence by transmitting an S1AP paging message to all eNB 104s within the tracking area in which the UE 102 is registered. The MME 122 may then start the paging timer T3413. The eNB 104 may receive the S1AP paging message from the MME 122 and construct an RRC paging message for the UE 102 (along with possibly other UE 102s to be paged). The UE 102 may check for paging in a paging occasion once every eDRX cycle, as above searching for its P-RNTI within the PDCCH of subframe belong to paging occasion.

A retransmission may be received at any point after expiry of the HARQ RTT timer (the shortest time in which to expect a retransmission). If data is to be retransmitted by the eNB 104 to the UE 102, the UE 102 may start the retransmission timer to start monitoring for the PDCCH carrying the retransmitted data. If the UE 102 receives control information, specifically a DRX command MAC control information unit, from the eNB 104 indicating that the UE 102 is to enter a sleep state, and the UE 1 02 may stop the on duration and inactivity timers, but not stop the retransmission timer. When the inactivity timer expires or the DRX command MAC control information unit is received, the UE 102 may start the DRX short or long cycle timer, dependent on which DRX mode is active.

In an extended DRX (eDRX) cycle, the eDRX configuration may indicate a superframe (SupF) and a superframe number (SupFN) rather than frame and SFN. A superframe frame may consist of 1024 frames. A SupFN may be 6, 8 or 10 bits, corresponding to 64, 256 or 1024 superframes. Each eDRX cycle, similar to the above DRX cycle, may be in an active or inactive state, and both of whose durations may be an integral multiple of a superframe length. A UE paging cycle length may be extended by setting an eDRX cycle. When paging a UE, the eNB may obtain a SupFN to page the UE, and then an SF (represented by an SFN) and a subframe (represented by a subframe number) that are in the super frame and are used for paging the UE.

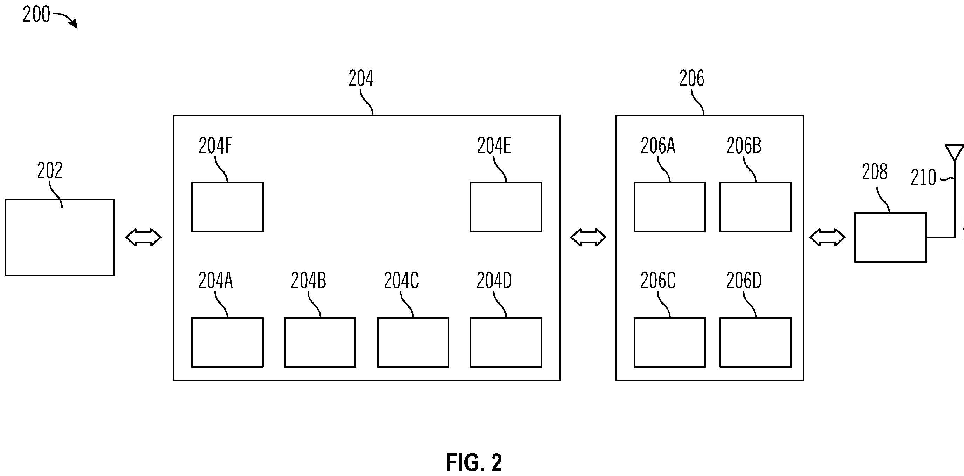

Embodiments described herein may be implemented into a system using any suitably configured hardware and/or software. FIG. 2 illustrates components of a UE in accordance with some embodiments. At least some of the components shown may be used in an eNB or MME, for example, such as the UE 102 or eNB 104 shown in FIG. 1. The UE 200 and other components may be configured to use an eDRX mode as described herein. The UE 200 may be one of the UEs 102 shown in FIG. 1 and may be a stationary, non-mobile device or may be a mobile device. In some embodiments, the UE 200 may include application circuitry 202, baseband circuitry 204, Radio Frequency (RF) circuitry 206, front-end module (FEM) circuitry 208 and one or more antennas 210, coupled together at least as shown. At least some of the baseband circuitry 204, RF circuitry 206, and FEM circuitry 208 may form a transceiver. In some embodiments, other network elements, such as the eNB may contain some or all of the components shown in FIG. 2. Other of the network elements, such as the MME, may contain an interface, such as the S1 interface, to communicate with the eNB over a wired connection regarding the UE.

The application or processing circuitry 202 may include one or more application processors. For example, the application circuitry 202 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The application circuitry 202 may also include a storage medium or storage device that stores instructions for operation of the UE 200. Embodiments may be implemented as instructions stored on a computer-readable storage medium, which may be read and executed by at least one processor to perform the operations described herein. A computer-readable storage medium may include any non-transitory mechanism for storing information in a form readable by a machine (e.g., a computer). For example, a computer-readable storage medium may include read-only memory (ROM), random-access memory (RAM), magnetic disk storage media, optical storage media, flash-memory devices, and other storage devices and media. Some embodiments may include one or more processors and may be configured with instructions stored on a computer-readable storage medium.

The baseband circuitry 204 may include circuitry such as, but not limited to, one or more single-core or multi-core processors. The baseband circuitry 204 may include one or more baseband processors and/or control logic to process baseband signals received from a receive signal path of the RF circuitry 206 and to generate baseband signals for a transmit signal path of the RF circuitry 206. Baseband processing circuity 204 may interface with the application circuitry 202 for generation and processing of the baseband signals and for controlling operations of the RF circuitry 206. For example, in some embodiments, the baseband circuitry 204 may include a second generation (2G) baseband processor 204a, third generation (3G) baseband processor 204b, fourth generation (4G) baseband processor 204c, and/or other baseband processor(s) 204d for other existing generations, generations in development or to be developed in the future (e.g., fifth generation (5G), 6G, etc.). The baseband circuitry 204 (e.g., one or more of baseband processors 204a-d) may handle various radio control functions that enable communication with one or more radio networks via the RF circuitry 206. The radio control functions may include, but are not limited to, signal modulation/demodulation, encoding/decoding, radio frequency shifting, etc. In some embodiments, modulation/demodulation circuitry of the baseband circuitry 204 may include Fast-Fourier Transform (FFT), preceding, and/or constellation mapping/demapping functionality. In some embodiments, encoding/decoding circuitry of the baseband circuitry 204 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 204 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 204e of the baseband circuitry 204 may be configured to run elements of the protocol stack for signaling of the PHY, MAC, RLC, PDCP and/or RRC layers. In some embodiments, the baseband circuitry may include one or more audio digital signal processor(s) (DSP) 204f. The audio DSP(s) 204f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 204 and the application circuitry 202 may be implemented together such as, for example, on a system on a chip (SOC).

In some embodiments, the baseband circuitry 204 may provide for communication compatible with one or more radio technologies. For example, in some embodiments, the baseband circuitry 204 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 204 is configured to support radio communications of more than one wireless protocol may be referred to as multi-mode baseband circuitry. In some embodiments, the device can be configured to operate in accordance with communication standards or other protocols or standards, including Institute of Electrical and Electronic Engineers (IEEE) 802.16 wireless technology (WiMax), IEEE 802.11 wireless technology (WiFi) including IEEE 802 ad, which operates in the 60 GHz millimeter wave spectrum, various other wireless technologies such as global system for mobile communications (GSM), enhanced data rates for GSM evolution (EDGE), GSM EDGE radio access network (GERAN), universal mobile telecommunications system (UMTS), UMTS terrestrial radio access network (UTRAN), or other 2G, 3G, 4G, 5G, etc. technologies either already developed or to be developed.

RF circuitry 206 may enable communication with wireless networks using modulated electromagnetic radiation through a non-solid medium. In various embodiments, the RF circuitry 206 may include switches, filters, amplifiers, etc. to facilitate the communication with the wireless network. RF circuitry 206 may include a receive signal path which may include circuitry to down-convert RF signals received from the FEM circuitry 208 and provide baseband signals to the baseband circuitry 204. RF circuitry 206 may also include a transmit signal path which may include circuitry to up-convert baseband signals provided by the baseband circuitry 204 and provide RF output signals to the FEM circuitry 208 for transmission.

In some embodiments, the RF circuitry 206 may include a receive signal path and a transmit signal path. The receive signal path of the RF circuitry 206 may include mixer circuitry 206a, amplifier circuitry 206b and filter circuitry 206c. The transmit signal path of the RF circuitry 206 may include filter circuitry 206c and mixer circuitry 206a. RF circuitry 206 may also include synthesizer circuitry 206d for synthesizing a frequency for use by the mixer circuitry 206a of the receive signal path and the transmit signal path. In some embodiments, the mixer circuitry 206a of the receive signal path may be configured to down-convert RF signals received from the FEM circuitry 208 based on the synthesized frequency provided by synthesizer circuitry 206d. The amplifier circuitry 206b may be configured to amplify the down-converted signals and the filter circuitry 206c may be a low-pass filter (LPF) or band-pass filter (BPF) configured to remove unwanted signals from the down-converted signals to generate output baseband signals. Output baseband signals may be provided to the baseband circuitry 204 for further processing. In some embodiments, the output baseband signals may be zero-frequency baseband signals, although this is not a requirement. In some embodiments, mixer circuitry 206a of the receive signal path may comprise passive mixers, although the scope of the embodiments is not limited in this respect.

In some embodiments, the mixer circuitry 206a of the transmit signal path may be configured to up-convert input baseband signals based on the synthesized frequency provided by the synthesizer circuitry 206d to generate RF output signals for the FEM circuitry 208. The baseband signals may be provided by the baseband circuitry 204 and may be filtered by filter circuitry 206c. The filter circuitry 206c may include a low-pass filter (LPF), although the scope of the embodiments is not limited in this respect.

In some embodiments, the mixer circuitry 206a of the receive signal path and the mixer circuitry 206a of the transmit signal path may include two or more mixers and may be arranged for quadrature down conversion and/or upconversion respectively. In some embodiments, the mixer circuitry 206a of the receive signal path and the mixer circuitry 206a of the transmit signal path may include two or more mixers and may be arranged for image rejection (e.g., Hartley image rejection). In some embodiments, the mixer circuitry 206a of the receive signal path and the mixer circuitry 206a may be arranged for direct downconversion and/or direct upconversion, respectively. In some embodiments, the mixer circuitry 206a of the receive signal path and the mixer circuitry 206a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 206 may include analog-to-digital converter (ADC) and digital-to-analog converter (DAC) circuitry and the baseband circuitry 204 may include a digital baseband interface to communicate with the RF circuitry 206.

In some dual-mode embodiments, a separate radio IC circuitry may be provided for processing signals for each spectrum, although the scope of the embodiments is not limited in this respect.

In some embodiments, the synthesizer circuitry 206d may be a fractional-N synthesizer or a fractional N/N+1 synthesizer, although the scope of the embodiments is not limited in this respect as other types of frequency synthesizers may be suitable. For example, synthesizer circuitry 206d may be a delta-sigma synthesizer, a frequency multiplier, or a synthesizer comprising a phase-locked loop with a frequency divider.

The synthesizer circuitry 206d may be configured to synthesize an output frequency for use by the mixer circuitry 206a of the RF circuitry 206 based on a frequency input and a divider control input. In some embodiments, the synthesizer circuitry 206d may be a fractional N/N+1 synthesizer.

In some embodiments, frequency input may be provided by a voltage controlled oscillator (VCO), although that is not a requirement. Divider control input may be provided by either the baseband circuitry 204 or the applications processor 202 depending on the desired output frequency. In some embodiments, a divider control input (e.g., N) may be determined from a look-up table based on a channel indicated by the applications processor 202.

Synthesizer circuitry 206d of the RF circuitry 206 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 206d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (f_{LO}). In some embodiments, the RF circuitry 206 may include an IQ/polar converter.

FEM circuitry 208 may include a receive signal path which may include circuitry configured to operate on RF signals received from one or more antennas 210, amplify the received signals and provide the amplified versions of the received signals to the RF circuitry 206 for further processing. FEM circuitry 208 may also include a transmit signal path which may include circuitry configured to amplify signals for transmission provided by the RF circuitry 206 for transmission by one or more of the one or more antennas 210.

In some embodiments, the FEM circuitry 208 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 206). The transmit signal path of the FEM circuitry 208 may include a power amplifier (PA) to amplify input RF signals (e.g., provided by RF circuitry 206), and one or more filters to generate RF signals for subsequent transmission (e.g., by one or more of the one or more antennas 210.

In some embodiments, the UE 200 may include additional elements such as, for example, memory/storage, display, camera, sensor, and/or input/output (I/O) interface as described in more detail below. In some embodiments, the UE 200 described herein may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), or other device that may receive and/or transmit information wirelessly. In some embodiments, the UE 200 may include one or more user interfaces designed to enable user interaction with the system and/or peripheral component interfaces designed to enable peripheral component interaction with the system. For example, the UE 200 may include one or more of a keyboard, a keypad, a touchpad, a display, a sensor, a non-volatile memory port, a universal serial bus (USB) port, an audio jack, a power supply interface, one or more antennas, a graphics processor, an application processor, a speaker, a microphone, and other I/O components. The display may be an LCD or LED screen including a touch screen. The sensor may include a gyro sensor, an accelerometer, a proximity sensor, an ambient light sensor, and a positioning unit. The positioning unit may communicate with components of a positioning network, e.g., a global positioning system (GPS) satellite.

The antennas 210 may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas 210 may be effectively separated to take advantage of spatial diversity and the different channel characteristics that may result.

Although the UE 200 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

The UE and eNB shown in FIGS. 1 and 2 may be able to use both an eDRX mode and a PSM. As discussed above, this may be particularly useful for MTC UEs that may or may not be mobile. MTC UEs may communicate infrequently at best, and the communications may be delay tolerant. Note that although LTE embodiments are disclosed below, similar embodiments may be applied to UMTS and other technologies. In particular, the UE may request one or both of the eDRX and PSM in an Attach Request or Tracking Area Update (TAU) message when initially attaching to the eNB (either during power on or during handover) and the MME may determine whether one or both of the modes are appropriate. Note that the DRX mode may extend to about 2.56s, eDRX mode is still under consideration by the 3GPP standards committee and may extend the time to about 43 minutes (likely to be about 2-5 minutes) and the PSM mode may extend up to 54 minutes. In PSM, unlike (e)DRX mode, the UE may not wake up for paging occasions from the MME and thus may be completely unavailable for downlink traffic.

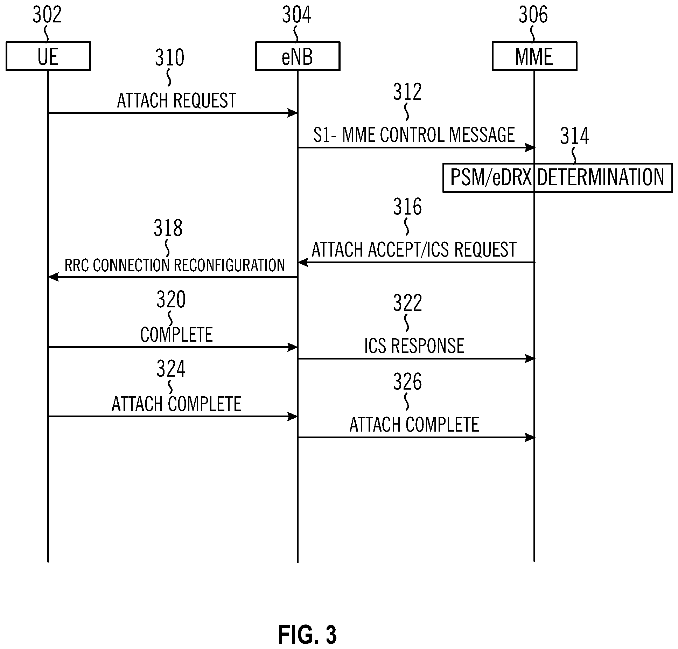

FIG. 3 illustrates an attach procedure flow in accordance with some embodiments. In FIG. 3, the Attach Request message 310 from the UE 302 may contain RRC parameters indicating selected network and old Globally Unique Mobility Management Entity Identifier. This parameters may include the International Mobile Subscriber Identity (IMSI) or Old Globally Unique Temporary ID (GUTI) of the UE, the last visited Tracking Area Index (TAI) of the UE, the UE core network capability, the UE specific DRX, an Attach type, an ESM Message container (Request type, PDN Type, Protocol Configuration Options, Ciphered Option Transfer flag) and an active mode timer value for T3324 (the time the UE stays in idle mode following the Attach or TAU procedure). As above, the Attach Request message 310 may thus include both the active timer for PSM and UE specific extended DRX parameter for eDRX.

Once the Attach Request message 310 is received, the eNB 304 may provide the Attach Request message 310 to the MME 306. The eNB 304 may then forward the Attach Request message to the MME in an S1-MME control message 312. The MME 306 may select a Serving Gateway for the UE 302 and allocate an EPS Bearer Identity for a Default Bearer to be associated with the UE 302. The MME 306 may select 314 a power reduction mode containing either or both the eDRX or PSM mode as a power saving option for the UE 302 based on one or more considerations, perhaps with modifications to the eDRX mode. These may include the operator's configuration (whether the eNB is set up to use either or both mode), traffic analysis of the UE 302 or application-related information received from subscription data. The application-related information may include the maximum possible delay and packet inter-arrival time (delay). For example, if the delay is extensive (e.g., IM or intermittent internet applications) and the maximum possible delay is long, eDRX may be selected. The MME 306 may thus ensure that the two methods can co-exist by choosing the timers accordingly, as well as provide support for inclusion of the paging timer or a corresponding timer within context information of the MME 306 for the particular UE 302.

The MME 306 may then communicate with a Serving Gateway (not shown in FIG. 3), which may communicate with a P-Gateway (not shown in FIG. 3). In some embodiments, the MME 306 may send a create session request message to the selected Serving Gateway. The Serving Gateway may create a new entry in its EPS Bearer table and send a create session request to the P-Gateway indicated by a Packet Data Network (PDN) Gateway address received from the MME 306. If, for example, the UE 302 is being handed over between MMEs, data may be buffered for the UE 302. The Serving Gateway may buffer downlink packets received from the PDN Gateway without sending a downlink data notification to the MME 306 until it receives a bearer request message from the MME 306. The P-Gateway may create a new entry in its EPS Bearer context table and generate a charging ID. The new entry may follow the P-Gateway to route user plane PDUs between the Serving Gateway and the PDN and to start charging. The PDN Gateway may return a create session response message to the Serving Gateway. The Serving Gateway may return a create session response to the MME 306.

The MME 306, after making the determination, may transmit an S1-MME control message Initial Context Setup (ICS) Request including an Attach Accept message 316 to the eNB 304. The eNB 304 may send an RRC Connection Re-Configuration message 318 and Attach Accept message to the UE 302, which may store the relevant information. The Attach Accept message 316, if the network has accepted the timer, may include the timer value for the idle mode timer requested by the UE 302.

After receiving the RRC Connection Re-Configuration message 318, the UE 302 may send an RRC Configuration Complete message 320 to the eNB 304. The eNB 304 may transmit an Initial Context Setup (ICS) Response 322 to the MME 306. The UE 302 may then send a message to the eNB 304 that includes the Attach Complete message 324, which may then be forwarded 326 to the MME 306. Upon reception of both the Initial Context Setup Response 322 and Attach Complete Message 326, the MME 306 may send a Modify Bearer Request to the Serving Gateway. The Serving Gateway may acknowledge this by sending a Modify Bearer Response (EPS Bearer Identity) message to the MME 306. The Serving Gateway may then send its buffered downlink packets to the UE 302.

In some embodiments, when the UE enters the idle state, it may still be reachable for the duration of the idle mode timer. After this time, the UE may switch to PSM, turning off its RF transmitter, in which the UE may be unable to be reached by paging. To exit PSM, the UE may originate signaling, e.g., from a user-initiated action, to send periodic (previously requested) data or upon expiration of T3412 TAU timer (which also may be indicated in the Attach Request) when the UE updates its TA.

As above, in some embodiments, a UE 302 can request the PSM by providing a T3324 active timer value in the Attach message as well as providing a UE-specific eDRX parameter. The timer value and/or eDRX parameter may be based on UE-specific power saving optimization, including statistics gathered by the UE 302 regarding inter-arrival time of traffic, subscription information, and power preference indication.

The MME 306, having received the Attach message through the eNB 304, may evaluate both the PSM and eDRX parameters and determine an appropriate response. Specifically, the MME 306 may evaluate specifics regarding the relationship between the PSM and eDRX and determine the manner to support PSM and eDRX. In particular, in some embodiments, the MME 306 may decide to support both PSM and eDRX if the T3324 timer value is greater than n eDRX cycles, assuming active DRX indicates the delay tolerance or response time of the UE 302. However, in some embodiments, even if the T3324 timer is greater than the predetermined number of eDRX cycles, the MME may offer a negotiated value rather than the requested value, i.e., the MME still may not offer the requested PSM, active timer, and eDRX cycle time.

This may be particularly useful for MTC UEs, such as medical devices (e.g. pacemakers) and controllers (such as temperature control in medical facilities) that have a high priority and low delay tolerance. For such MTC devices, use of the eDRX may not be desirable and thus, even though the UE may initially request eDRX or PSM, either or both may be denied dependent on the above.

Thus, it may be desirable for the MME 306 to ensure that the T3324 active timer value extends for substantially longer than the eDRX cycle time (i.e., over several cycles) to ensure that the UE 302 is able to receive downlink pages from the MME 306. In some embodiments, n may be three, although any reasonable integer value may be used. In some embodiments, the MME 306 may decide to verify the UE 302 response time, if available, if the T3324 timer value is less than n eDRX cycles. The MME 306 may verify whether the response time is sufficiently high, e.g., being comparable to the T3412 TAU timer, then the T3324 timer value may be adjusted by the MME 306 to accommodate n eDRX cycles. The MME 306 may provide the T3324 timer value, whether adjusted or not, in the Attach Accept or TAU accept message. In some embodiments, if the T3324 timer value is less than three eDRX cycles and the UE 302 response time is not available for verification (or is available and not verified), the MME 306 may select among different options. Specifically, the MME 306 may propose PSM use only with an active timer using the normal DRX cycle, for an example, to support mobile terminatedSMS access.

Alternatively, the MME 306 may propose (in an Attach Accept or TAU ACK) eDRX use with a suitable cycle length, as described herein. The UE 302 may accept the proposed changes to the eDRX cycle time or may renegotiate with the MME 306. For example, the UE 302 may use a TAU message to request an eDRX cycle time that is different from the eDRX cycle time proposed by the MME 306. The eDRX cycle time in the renegotiation may in some embodiments be different from the originally requested eDRX cycle time. The MME 306 may transmit a message to the UE 302 indicating to the UE 302 to not attempt to renegotiate using the originally requested eDRX cycle time after one or more attempts by the UE 302 to renegotiate using the originally requested eDRX cycle time.

The UE 302 may, in some embodiments, propose or request a better power optimization technique (i.e. eDRX or PSM) using a periodic or normal TAU/RAU procedure. The normal TAU/RAU procedure may occur, for example, when the UE 302 determines that it has entered a new TA that is not in the list of Tracking Area Indicators (TAIs) that the UE 302 registered with the network, when the UE 302 switches between specific states or radio access technologies or the RRC connection fails. The periodic TAU/RAU procedure may be used to periodically notify the availability of the UE 302 to the network and performed when the UE 302 TA update timer has expired.

In some embodiment, the MME 306 may select a specific power saving mode for the UE 302 to use. The selection process may be based on derived statistics information of the UE 302 obtained via Core Network Assistance Information obtained, for example, from the MME 306, P-GW or SGW. The statics may include, for example, packet inter-arrival time and transition time between RRC Idle and RRC Connected mode. In some embodiments, the MME 306 may select between the eDRX and PSM mechanism based on the configuration of the operator (e.g., ATT who may have configured the Subscriber Identity Module (SIM) card in the UE) or the vendor (selling the UE to the vendor or user), and/or application related information received from subscription data (e.g. max possible delay, packet inter-arrival time etc.). In some embodiments, selection of a specific mechanism may be based on the capability supported by the MME 306. In other words, the UE 302 may request to use the PSM and eDRX in the Attach Request; the MME 306, however, may only support one of the two methods.

Alternatively, or in addition, in some embodiments, the MME 306 maintains Evolved Packet Service (EPS) mobility management (EMM) context and EPS bearer context information for the UE 302. EMM context describes the EMM states that result from mobility management procedures, such as Attach and TAU. EPS bearer context information indicates an EPS bearer context of the UE 302 with a specific QoS and Traffic flow template (TFT) between the UE 302 and the EPC. A PDN connection includes a Default EPS bearer and one or more dedicated EPS bearers. The TFT defines IP packet destination/source or protocol rules so that the UE 302 and the network know on which dedicated bearer an IP packet should be sent.

The EMM states may include EMM-REGISTERED and EMM-DEREGISTERED. The EPS Connection Management (ECM) states describe the signaling connectivity between the UE 302 and the EPC. The ECM states may include ECM-IDLE and ECM-CONNECTED. Transition between some of the EMM states, e.g., from EMM-REGISTERED to EMM-DEREGISTERED can occur regardless of the ECM state, e.g. by explicit detach signaling in ECM-CONNECTED or by implicit detach locally in the MME 306 during ECM-IDLE. For other transitions such as from EMM-DEREGISTERED to EMM-REGISTERED, however, the UE 302 is in the ECM-CONNECTED state.

In the EMM DEREGISTERED state, the EMM context in MME 306 holds no valid location or routing information for the UE 302. The UE 302 may not be reachable by a MME 306, as the UE 302 location is not known. The UE 302 may enter the EMM-REGISTERED state by registration with an Attach procedure to either E-UTRAN or GERAN/UTRAN. The UE 302 may enter the EMM-REGISTERED state by a successful Tracking Area Update procedure by selecting an E-UTRAN cell from GERAN/UTRAN or by an Attach procedure via E-UTRAN. In the EMM-REGISTERED state, the UE 302 may receive services that require registration in the EPS. The UE 302 location may be known in the MME 306 to at least an accuracy of the tracking area list allocated to that UE 302. In the EMM-REGISTERED state, the UE 302 may have at least one active PDN connection and set up the EPS security context.

After performing the Detach procedure, the EMM state may be changed to EMM-DEREGISTERED in the UE 302 and in the MME 306. Upon receiving a TAU/Attach Reject messages, the UE 302 and MME 306 actions may depend upon parameters in the particular reject message, but the EMM state may generally be changed to EMM-DEREGISTERED in the UE 302 and in the MME 306.

If all the bearers belonging to a UE 302 are released (e.g., after handover from E-UTRAN to non-3GPP access), the MME 306 may change the MM state of the UE 302 to EMM-DEREGISTERED. If the UE 302 camps on E-UTRAN and the UE 302 detects that all of its bearers are released, the UE 302 may change the MM state to EMM-DEREGISTERED. If all the bearers belonging to a UE 302 are released, the UE 302 may perform a TAU when it reselects the E-UTRAN. If the UE 302 switches off its E UTRAN interface when performing a handover to non-3GPP access, the UE 302 may automatically change its MM state to EMM-DEREGISTERED.

A UE 302 is in ECM-IDLE state when no NAS signaling connection between the UE 302 and network exists. In the ECM-IDLE state, a UE 302 may perform a cell selection/reselection according to TS 36.304 and PLMN selection according to TS 23.122. No UE 302 context may be present in E-UTRAN for the UE 302, nor may the UE 302 have a S1_MME and S1_U connection, in the ECM-IDLE state. In the EMM-REGISTERED and ECM-IDLE state, the UE 302 may perform a tracking area update, e.g., either if the UE 302 is connected with an unlisted TA or periodically, answer MME 306 paging and establish radio bearers when uplink user data is to be sent. The UE 302 and the MME 306 may enter the ECM-CONNECTED state when a signaling connection is established between the UE 302 and the MME 306. NAS messages that may initiate a transition from ECM-IDLE to ECM-CONNECTED state include an Attach Request, Tracking Area Update Request, Service Request or Detach Request. When the UE 302 is in ECM IDLE state, the UE 302 and the network may have different sets of established EPS bearers: when the UE 302 and the MME 306 enter the ECM CONNECTED state, the set of EPS Bearers may be synchronized between the UE 302 and network. The UE 302 may enter the ECM-IDLE state from the ECM CONNECTED state when its signaling connection to the MME 306 (RRC connection and S1_MME connection) has been released or broken. This may be explicitly indicated by the eNB 304 to the UE 302 or detected by the UE 302.

As above, a UE 302 in the EMM-REGISTERED state may transition from the ECM-IDLE state to the ECM CONNECTED state to respond to MME 306 paging. The paging occasions that the UE 302 is to respond to may be established by the paging timer T3413. The paging timer T3413 may be initiated by the MME 306 when paging for EPS services is initiated and may be terminated when the paging is competed or aborted. While the paging timer T3413 may typically be the same for all UE 302s attached to a particular eNB 304 or MME 306, whether or not they operate on a DRX cycle, this may change when the UE 302 operates using an eDRX cycle. Notably, as the paging timer T3413 may run based on the eDRX cycle, it may be set to a larger value than the DRX cycle value and thus may be defined on a per-UE basis. Thus, when an eDRX cycle is used by the UE 302, the paging timer T3413 defined may be maintained per UE 302 in the MME 306 MM context.

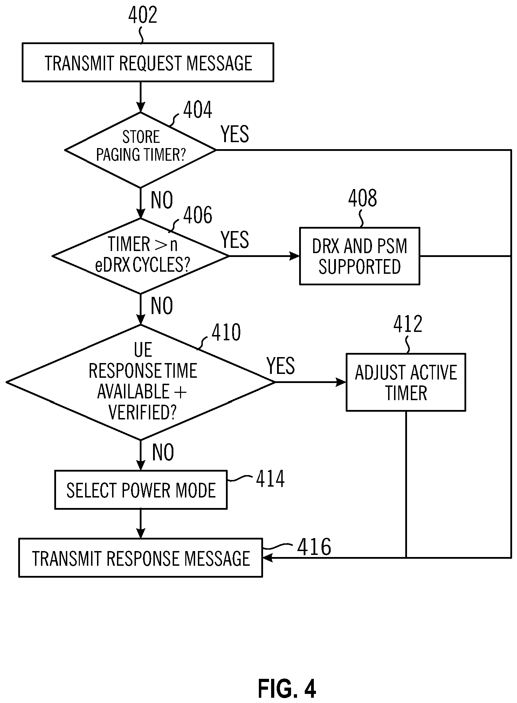

FIG. 4 illustrates a flowchart of a method of UE attachment in accordance with some embodiments. The UE, eNB and MME providing the operations in FIG. 4 may be shown in FIGS. 1-3. The UE may communicate with the MME through NAS protocol. The UE may be in the EMM-DEREGISTERED state and attempt to transition into an EMM-REGISTERED state by initially attaching to an MME or implementing a TAU procedure. The UE may analyze its QoS requirements, for example, delay requirements, to identify one or more types of power saving techniques (PSM and eDRX) that would provide a desired amount of power savings and, for example, determine a combination of PSM and eDRX modes is desired. Accordingly at operation 402, the UE may transmit a request message to the eNB. The request message may be an Attach Request or TAU message. The request message may contain RRC parameters including an active timer for PSM and eDRX parameter for indicating a time for an eDRX cycle. The timer value and/or eDRX parameter may be based on UE-specific power saving optimization, including statistics gathered by the UE (or other network entity) regarding inter-arrival time of traffic, subscription information, and power preference indication, among others.

The eNB, having received the request message, may transmit the request message in an S1-MME control message to the MME. The MME may maintain EMM context and EPS bearer context information for the UE. At operation 404, the MME may determine whether a UE-specific paging timer T3413 is to be stored. If the MME is able to store a paging timer specifically for the UE, the MME may base paging occasions for the UE on the eDRX cycle time value provided by the UE in the Attach Request message. This is to say that the MME may limit paging opportunities for the UE to PDCCHs that are specifically based on the eDRX cycle of the UE. The MME may set the paging timer to a value slightly larger than the eDRX cycle time value (e.g., one standard paging occasion longer).

If the MME determines that it is not able to store individualized UE paging timers, instead using standard paging timers compatible with DRX cycle times, the MME may extract the eDRX cycle time value and PSM request from the Attach Request message. The MME may determine the relationship between the requested eDRX cycle time and the T3324 active timer value at operation 406. Specifically, the MME may at operation 406 determine whether the T3324 active timer value is larger than or smaller than a predetermined multiple of the eDRX cycle time.

If the MME determines that the T3324 active timer value is larger than the eDRX cycle time, the MME may at operation 408 determine that both the cDRX and PSM modes may be supported for the specific UE. The multiplier used to make the determination may be set to, for example, an integer number of eDRX cycles. The multiplier may be predetermined and used for all UEs or may be UE-specific, based, for example, on the delay tolerance or response time of the UE. In some embodiments, even if the T3324 active timer is greater than a predetermined number of eDRX cycles, the MME may offer a negotiated T3324 active timer value rather than the requested T3324 active timer value.

If the MME determines that the T3324 active timer value is smaller than the eDRX cycle time, the MME may still permit both modes to be supported. However, further consideration may be used by the MME to make the determination. Specifically, at operation 410 the MME may turn to the UE response time. The MME may also make sure that the response time is that the response time is comparable to or greater than the T3412 TAU time.

In response to the MME determining that the response time is able to be verified, and is sufficiently high, the MME may modify the requested T3324 active timer value at operation 412. The MME may increase the T3324 active timer value to meet the conditions of operation 408, i.e., the T3324 active timer value greater than the multiple eDRX cycles.

The MME may instead be unable to verify the response time. This is to say that the response time either may not be available to the MME or is available but unable to be verified by the MME. In this case, the MME may select between the PSM mode and eDRX mode for the UE at operation 414. In some embodiments, the MME may select a PSM with an active timer using the normal DRX cycle. Alternatively, the MME 306 may select eDRX with a shorter cycle length. For example, the MME may reduce the eDRX cycle time to meet the conditions of operation 408. The selection between the PSM with DRX mode and eDRX mode with reduced cycle time may be based on the operator configuration, traffic analysis of the UE and/or application-related information received from subscription data, among others.

At operation 416, the MME may provide the T3324 active timer value, along with the T3413 paging timer, in an Attach Accept or TAU accept message, dependent on the request message. The T3324 active timer may or may not be adjusted from the value requested by the UE. Although not shown, the UE may attempt to renegotiate the timer, as explained above.

Thus, the MME may enable either or both the PSM and eDRX mode. This is to say that the MME may enable only PSM and not accept the request for eDRX mode, enable only eDRX mode and not accept the request for an active time for PSM, or enable both PSM by providing an active time and eDRX mode by providing provide eDRX parameters. If both eDRX mode and PSM are enabled, the eDRX cycle may be set to have multiple paging occasions while the active timer is running.

In some embodiments, the addition of the paging procedure timer for the extended DRX cycle may be added as part of the MM context maintained at the MME per UE. A truncated version of Table 5.7.2-1 containing the paging procedure timer for the extended DRX cycle is shown below.

**Table 5.7.2-1: MME MM and EPS bearer Contexts**

| **Field** | **Description** |
|---|---|
| IMSI | IMSI (International Mobile Subscriber Identity) is the subscribers permanent identity. |
| IMSI-unauthenticated-indicator | This is an IMSI indicator to show the IMSI is unauthenticated. |
| MSISDN | The basic MSISDN of the UE. The presence is dictated by its storage in the HSS. |
| MM State | Mobility management state ECM-IDLE, ECM-CONNECTED, EMM-DEREGISTERED. |
| GUTI | Globally Unique Temporary Identity. |
| ME Identity | Mobile Equipment Identity - (e.g. 1ME1/1ME1SV) Software Version Number |
| Tracking Area List | Current Tracking area list |
| TAI of last TAU | TAI of the TA in which the last Tracking Area Update was initiated. |
| E-UTRAN Cell Global Identity | Last known E-UTRAN cell |
| ... | .. |
| ... | ... |
| Paging procedure timer for extended DRX cycle | Paging timer to run based on the extended DRX cycle and set slightly larger than the DRX cycle value |

The specification and drawings are to be regarded in an illustrative rather than a restrictive sense. The accompanying drawings that form a part hereof show, by way of illustration, and not of limitation, specific embodiments in which the subject matter may be practiced. The embodiments illustrated are described in sufficient detail to enable those skilled in the art to practice the teachings disclosed herein.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, UE, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

## Claims

1. An apparatus of user equipment, UE (102, 200, 302), comprising:
a transceiver configured to communicate with a mobility management entity, MME (306), through an evolved NodeB, eNB (104, 304); and
processing circuitry (202) configured to:
configure the transceiver to transmit a request message (310) to the eNB (104, 304) for the UE (102, 200, 302) to use a combination of a power saving mode, PSM, and an extended Discontinuous Reception, eDRX, mode;
configure the transceiver to receive a response message to the request message (310) from the eNB (104, 304) indicating the UE (102, 200, 302) to use, as a power reduction mode,
a combination of the PSM and an eDRX mode having a modified eDRX cycle time; and
configure the UE (102, 200, 302) to communicate with the eNB (104, 304) in accordance with the power reduction mode indicated in the response message, wherein:
the request message (310) comprises one of an Attach Request and a tracking area update, TAU, message, whereby the one of the Attach Request and
TAU message contains Radio Resource Control, RRC, parameters including an active timer for PSM and eDRX parameter for indicating a time for an eDRX cycle.

2. The apparatus of claim 1, wherein:
the response message comprises one of an Attach Request and a TAU message comprising a response active timer and a response eDRX cycle time, the response active timer comprising the requested active timer and
the response eDRX cycle time being the requested eDRX cycle time when the requested active timer is greater than a predetermined number of requested eDRX cycles, and
the UE (102, 200, 302) is configured to operate in accordance with both the PSM and the eDRX mode in response to receiving the response message.

3. A method performed by an apparatus of user equipment, UE (102, 200, 302), the method comprising:
communicating with a mobility management entity, MME (306), through an evolved NodeB, eNB (104, 304);
transmitting a request message (310) to the eNB (104, 304) for the UE (102, 200, 302) to use a combination of a power saving mode, PSM, and an extended Discontinuous Reception, eDRX, mode;
receiving a response message to the request message (310) from the eNB (104, 304) indicating the UE (102, 200, 302) to use, as a power reduction mode, a combination of the PSM and an eDRX mode having a modified eDRX cycle time; and
communicating with the eNB (104, 304) in accordance with the power reduction mode indicated in the response message, wherein:
the request message (310) comprises one of an Attach Request and a tracking area update, TAU, message, whereby the one of the Attach Request and TAU message contains Radio Resource Control, RRC, parameters including an active timer for PSM and eDRX parameter for indicating a time for an eDRX cycle.

4. The method of claim 3, wherein: the response message comprises one of an Attach Request and a TAU message comprising a response active timer and a response eDRX cycle time, the response active timer comprising the requested active timer and the response eDRX cycle time being the requested eDRX cycle time when the requested active timer is greater than a predetermined number of requested eDRX cycles, and the method further comprises:
operating, by the UE (102, 200, 302), in accordance with both the PSM and the eDRX mode in response to receiving the response message.

## Patentansprüche

1. Vorrichtung eines Anwendergeräts, UE, (102, 200, 302), das Folgendes umfasst:
einen Sendeempfänger, der konfiguriert ist, mit einer Mobilitätmanagemententität, MME, (306) durch einen entwickelten NodeB, eNB, (104, 304) zu kommunizieren; und
eine Verarbeitungsschaltung (202), die konfiguriert ist zum:
Konfigurieren des Sendempfängers, eine Anforderungsnachricht (310) an den eNB (104, 304) für das UE (102, 200, 302) zu senden, um eine Kombination einer Energiesparbetriebsart, PSM, und einer Betriebsart eines erweiterten nicht kontinuierlichen Empfangs, eDRX, zu verwenden;
Konfigurieren des Sendempfängers, eine Antwortnachricht auf die Anforderungsnachricht (310) von dem eNB (104, 304) zu empfangen, die dem UE (102, 200, 302) angibt, als eine Leistungsreduzierbetriebsart zu verwenden:
eine Kombination der PSM und einer eDRX-Betriebsart mit einer geänderten eDRX-Zykluszeit; und
Konfigurieren des UE (102, 200, 302) mit dem eNB (104, 304) in Übereinstimmung mit der Leistungsreduzierbetriebsart, die in der Antwortnachricht angegeben ist, zu kommunizieren, wobei:
die Anforderungsnachricht (310) eine Anschlussanforderungs- und eine Verfolgungsbereichsaktualisierungsnachricht, TAU-Nachricht, umfasst, wobei die eine der Anschlussanforderungs- und der TAU-Nachricht Funkbetriebsmittelsteuerparameter, RRC-Parameter, enthält, die einen aktiven Zeitgeber für PSM und eDRX-Parameter zum Angeben einer Zeit für einen eDRX-Zyklus enthalten.

2. Vorrichtung nach Anspruch 1, wobei:
die Antwortnachricht eine Anschlussanforderungs- oder eine TAU-Nachricht umfasst, die einen aktiven Antwort-Zeitgeber und eine Antwort-eDRX-Zykluszeit umfasst, wobei der aktive Antwort-Zeitgeber den angeforderten aktiven Zeitgeber umfasst und
die Antwort-eDRX-Zykluszeit die angeforderte eDRX-Zykluszeit ist, wenn
der angeforderte aktive Zeitgeber größer als eine vorbestimmte Anzahl von angeforderten eDRX-Zyklen ist, und
das UE (102, 200, 302) konfiguriert ist, in Übereinstimmung sowohl mit der PSM- als auch mit der eDRX-Betriebsart als Reaktion auf das Empfangen der Antwortnachricht zu arbeiten.

3. Verfahren, das durch eine Vorrichtung eines Anwendergeräts, UE, (102, 200, 302) ausgeführt wird, wobei das Verfahren Folgendes umfasst:
Kommunizieren mit einer Mobilitätsmanagemententität, MME, (306) durch einen entwickelten NodeB, eNB, (104, 304) ;
Senden einer Antwortnachricht (310) an den eNB (104, 304) für das UE (102, 200, 302), um eine Kombination einer Energiesparbetriebsart, PSM, und einer Betriebsart eines erweiterten nicht kontinuierlichen Empfangs, eDRX, zu verwenden;
Empfangen einer Antwortnachricht auf die Anforderungsnachricht (310) von dem eNB (104, 304), die dem UE (102, 200, 302) angibt, als eine Leistungsreduzierbetriebsart eine Kombination der PSM und einer sDRX-Betriebsart mit einer geänderten eDRX-Zykluszeit zu verwenden; und
Kommunizieren mit dem eNB (104, 304) in Übereinstimmung mit der Leistungsreduzierbetriebsart, die in der Antwortnachricht angegeben ist, wobei:
die Anforderungsnachricht (310) eine Anschlussanforderungs- und eine Verfolgungsbereichsaktualisierungsnachricht, TAU-Nachricht, umfasst, wobei die eine der Anschlussanforderungs- und der TAU-Nachricht Funkbetriebsmittelsteuerparameter, RRC-Parameter, enthält, die einen aktiven Zeitgeber für PSM und eDRX-Parameter zum Angeben einer Zeit für einen eDRX-Zyklus enthalten.

4. Verfahren nach Anspruch 3, wobei:
die Antwortnachricht eine Anschlussanforderungs- oder eine TAU-Nachricht umfasst, die einen aktiven Antwort-Timer und eine Antwort-eDRX-Zykluszeit umfasst, wobei der aktive Antwort-Zeitgeber den angeforderten aktiven Zeitgeber umfasst und
die Antwort-eDRX-Zykluszeit die angeforderte eDRX-Zykluszeit ist, wenn
der angeforderte aktive Zeitgeber größer als eine vorbestimmte Anzahl von angeforderten eDRX-Zyklen ist und
das Verfahren ferner Folgendes umfasst:
Arbeiten durch das UE (102, 200, 302) in Übereinstimmung sowohl mit der PSM als auch mit der eDRX-Betriebsart als Reaktion auf das Empfangen der Antwortnachricht.

## Revendications

1. Appareil d'un équipement utilisateur, UE (102, 200, 302), comprenant :
un émetteur récepteur configuré pour communiquer avec une entité de gestion de mobilité, MME (306), au travers d'un nœud NodeB évolué, eNB (104, 304), et des circuits de traitement (202), conformé pour :
configurer l'émetteur récepteur pour qu'il transmette un message de requête (310) au nœud eNB (104, 304) pour que l'équipement utilisateur UE (102, 200, 302) utilise une combinaison d'un mode d'économie d'énergie, PSM et d'un mode de réception discontinue étendue, eDRX,
configurer l'émetteur récepteur pour qu'il reçoive un message de réponse au message de requête (310) en provenance du nœud eNB (104, 304) indiquant à l'équipement utilisateur UE (102, 200, 302) d'utiliser, comme mode de réduction d'énergie, une combinaison du mode PSM et du mode eDRX présentant une durée de cycle de mode eDRX modifiée, et
configurer l'équipement utilisateur UE (102, 200, 302) pour qu'il communique avec le nœud eNB (104, 304) en fonction du mode de réduction d'énergie indiqué dans le message de réponse, où
le message de requête (310) comporte l'un parmi un message de requête d'attachement et un message de mise à jour de zone de poursuite, TAU, grâce à quoi
le message reçu parmi le message de requête d'attachement et le message de mise à jour TAU contient des paramètres de commande de ressources radio, RRC, incluant un paramètre d'horloge active pour le mode PSM et le mode eDRX permettant d'indiquer la durée d'un cycle de mode eDRX.

2. Appareil selon la revendication 1, dans lequel :
le message de réponse comprend l'un d'un message de requête d'attachement et d'un message de mise à jour TAU comprenant une horloge active de réponse et une durée de cycle de mode eDRX de réponse, l'horloge active de réponse comprenant l'horloge active demandée et la durée de cycle de mode eDRX de réponse représentant la durée de cycle de mode eDRX demandée lorsque l'horloge active demandée est supérieure à un nombre prédéterminé de cycles de mode eDRX demandés, et
l'équipement utilisateur UE (102, 200, 302) est configuré pour fonctionner conformément à la fois avec le mode PSM et le mode eDRX en réponse à la réception du message de réponse.

3. Procédé réalisé par un appareil d'équipement utilisateur, UE (102, 200, 302), le procédé comprenant :
une communication avec une entité de gestion de mobilité, MME (306), au travers d'un nœud NodeB évolué, eNB (104, 304),
la transmission d'un message de requête (310) au nœud eNB (104, 304) pour que l'équipement utilisateur UE (102, 200, 302) utilise une combinaison d'un mode d'économie d'énergie, PSM et d'un mode de réception discontinue étendue, eDRX,
la réception d'un message de réponse au message de requête (310) en provenance du nœud eNB (104, 304) indiquant à l'équipement utilisateur UE (102, 200, 302) d'utiliser, comme mode de réduction d'énergie, une combinaison du mode PSM et du mode eDRX présentant une durée de cycle de mode eDRX modifiée, et
une communication avec le nœud eNB (104, 304) en fonction du mode de réduction d'énergie indiqué dans le message de réponse, où
le message de requête (310) comporte l'un parmi un message de requête d'attachement et un message de mise à jour de zone de poursuite, TAU, grâce à quoi
le message reçu parmi le message de requête d'attachement et le message de mise à jour TAU contient des paramètres de commande de ressources radio, RRC, incluant un paramètre d'horloge active pour le mode PSM et le mode eDRX permettant d'indiquer la durée d'un cycle de mode eDRX.

4. Procédé selon la revendication 3, dans lequel :
le message de réponse comprend l'un d'un message de requête d'attachement et d'un message de mise à jour TAU comprenant une horloge active de réponse et une durée de cycle de mode eDRX de réponse, l'horloge active de réponse comprenant l'horloge active demandée et la durée de cycle de mode eDRX de réponse représentant la durée de cycle de mode eDRX demandée lorsque l'horloge active demandée est supérieure à un nombre prédéterminé de cycles de mode eDRX demandés, et le procédé comprend en outre :
la mise en œuvre, par l'équipement utilisateur UE (102, 200, 302), à la fois avec le mode PSM et le mode eDRX en réponse à la réception du message de réponse.
